# EUROPEAN PATENT APPLICATION

(11) **EP 1 739 671 A2**
(43) Date of publication of application: **03.01.2007**
(21) Application number: 06101253.0
(22) Date of filing: 03.02.2006
(51) Int. Cl.: G11B 20/00

(54) **Media key generation method, media key generation apparatus**

(30) Priority: 29.06.2005 JP 2005190100
(71) Applicant: KABUSHIKI KAISHA TOSHIBA, Tokyo 105-8001 (JP)
(72) Inventor: Ohno, Katsuya Toshiba Corporation, Tokyo, 105-8001 (JP); Mawatari, Masahiko Toshiba Corporation, Tokyo, 105-8001 (JP)
(74) Representative: Henkel, Feiler & Hänzel

(57) **Abstract**

In a media key generation apparatus (10) which generates the media key of an AACS-compatible medium according to the present invention, a search unit (12) searches encryption values (A) recorded on the medium (M) for an encryption value (A) associated with a coordinate (Nr) derived from a coordinate associated with one of a plurality of device keys (Dk) held in a system (30). A calculation unit (14) calculates the device key value (Dk) obtained by encrypting the found encryption value (A), from the device key (Dk) associated with the coordinate (Nr) serving as a derivation source on the basis of the derivation relationship between the coordinate associated with the found encryption value and the coordinate serving as the derivation source. A write unit (16) writes, in a nonvolatile storage medium (18), the calculated device key value (Dk), block identification information (Ver), and storage position information (H) of the found encryption value (A) in the block (Mkb).

## Description

The present invention relates to a method and apparatus for generating a media key which is required to play back content recorded on a medium such as a DVD and copyrighted by Advanced Access Content System.

For example, as disclosed in Jpn. Pat. Appln. KOKAI Publication No. 2002-123429, along with the improvement and development of digital signal processing techniques, a recording/playback apparatus with a recording medium such as an HD, and a medium such as a DVD have prevailed recently, which are used to digitally record information. By using such recording/playback apparatus and medium, for example, image and audio data can be repeatedly recorded and played back without degrading quality.

Since the digital data can be repeatedly copied many times while the image and audio qualities are maintained, the advantage of a copyright holder or official marketing right holder of various contents such as music and video is impaired when illegally copied media become pervasive on a market. These days, in order to prevent such illicit copying of digital data, various mechanisms (systems) for preventing the illegal copying have been introduced into the recording/playback apparatus, playback apparatus, and medium for the digital data.

As one example of the system, Advanced Access Content System (to be referred to as "AACS" hereinafter) is disclosed in http://www.aacsla.com/. A device key determined in accordance with a specific rule is supplied to an AACS-compatible recording/playback apparatus or playback apparatus, and specific encryption information is supplied to an AACS-compatible medium.

When the medium is to be played back, the recording/playback apparatus or playback apparatus generates a media key from the encryption information of the medium by using the device key of the recording/playback apparatus or playback apparatus itself. By using this media key, the content recorded on the medium can be played back.

As described above, in AACS, the media key must be first generated to play back the content recorded on the medium.

However, a processing amount for generating the media key is enormous, and a long period of time is required for generating the media key. Hence, a waiting time from when the medium is inserted into the playback apparatus until the content on the medium is started to be played back becomes prolonged, thus posing a problem.

The present invention has been made in consideration of the above situation, and has as its object to provide a media key generation method, and media key generation apparatus capable of reducing a processing load required to generate a media key when a medium on which content copyrighted by AACS is recorded is to be played back.

According to an embodiment of the present invention, in a method, a media key required to cause a playback system to play back content recorded on a medium and copyrighted by Advanced Access Content System is generated.

The playback system holds one of a plurality of device keys required to generate the media key, in association with one of coordinates hierarchically arranged in a tree structure.

The medium stores, in a block to which identification information unique to the medium is supplied in advance, each encryption value obtained by encrypting the media key supplied to the medium in advance by using each device key associated with one of the coordinates hierarchically arranged in the tree structure, in association with the coordinate associated with the corresponding device key.

The method comprises searching the encryption values stored in the block for the encryption value associated with a parent coordinate serving as a coordinate associated with one of the plurality of device keys held in the playback system, or a derivation coordinate serving as a coordinate on a lower layer side of the parent coordinate serving as a derivation source, calculating a device key value obtained by encrypting the found encryption value from the device key associated with the parent coordinate, on the basis of a derivation relationship between the parent coordinate and the coordinate associated with the found encryption value, and generating the media key by using the calculated device key value and the found encryption value.

According to another embodiment of the present invention, an apparatus generates a media key required to cause a playback system to play back contents recorded on a medium and copyrighted by Advanced Access Content System.

The playback system holds one of a plurality of device keys required to generate the media key, in association with one of coordinates hierarchically arranged in a tree structure.

The medium stores, in a block to which identification information unique to the medium is supplied in advance, each encryption value obtained by encrypting the media key supplied to the medium in advance by using each device key associated with one of the coordinates hierarchically arranged in the tree structure, in association with the coordinate associated with the corresponding device key.

The apparatus comprises a search unit which searches the encryption values stored in the block for the encryption value associated with a parent coordinate serving as a coordinate associated with one of the plurality of device keys held in the playback system, or a derivation coordinate serving as a coordinate on a lower layer side of the parent coordinate serving as a derivation source, a calculation unit which calculates a device key value obtained by encrypting the found encryption value from the device key associated with the parent coordinate, on the basis of a derivation relationship between the parent coordinate and the coordinate associated with the found encryption value, and a generation unit which generates the media key by using the calculated device key value and the found encryption value.

The present invention can implement the media key generation method, and media key generation apparatus capable of reducing the processing load required to generate the media key when the medium on which the content copyrighted by AACS is recorded is to be played back.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a functional block diagram showing an example of an arrangement of a media key generation apparatus to which a media key generation method is applied according to the first embodiment;
FIG. 2 is a view showing an example of a tree structure applied in AACS;
FIG. 3 is a flowchart showing an operation example to write, on a nonvolatile storage medium, medium version information, a device key, and an encryption value storage location;
FIG. 4 is a flowchart showing an operation example when contents recorded on the medium and copyrighted by AACS are to be played back by a system; and
FIG. 5 is a functional block diagram showing an example of an arrangement of a media key generation apparatus to which a media key generation method is applied according to the second embodiment.

The best mode for carrying out the present invention will be described below with reference to the accompanying drawing.

### (First Embodiment)

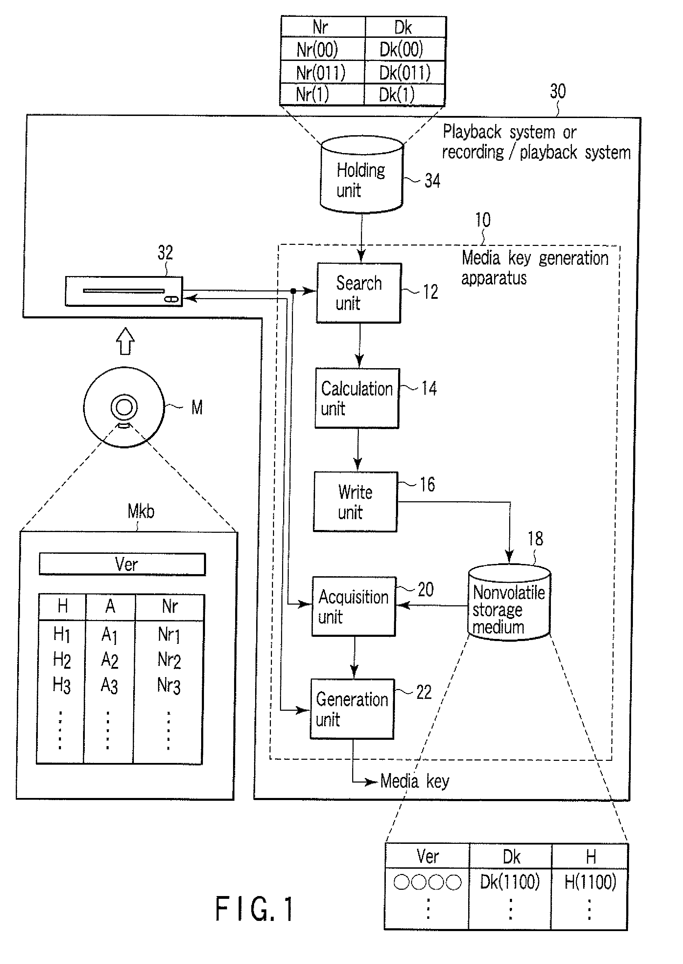

FIG. 1 is a functional block diagram showing an example of an arrangement of a media key generation apparatus to which a media key generation method is applied according to the first embodiment.

That is, a media key generation apparatus 10 to which the media key generation method is applied according to the first embodiment is an apparatus which generates a media key Mk required to cause a playback system or recording/playback system 30 to play back content recorded on a medium M such as a DVD and copyrighted by AACS. Hence, as shown in FIG. 1, the media key generation apparatus 10 is preferably incorporated in the playback system or recording/playback system (to be referred to simply as a "system" hereinafter) 30. However, the present invention is not limited to this arrangement. Note that the detailed arrangement of the system 30 is not illustrated in FIG. 1.

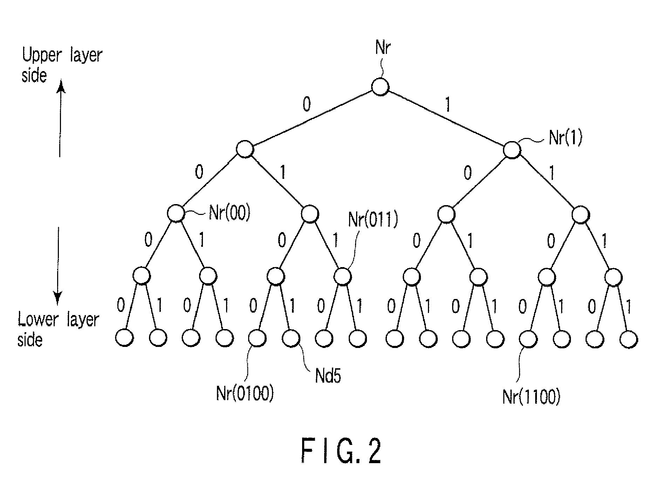

In association with, for example, one of nodes N corresponding to hollow bullets included in a hierarchical tree structure shown in FIG. 2, the system 30 holds one of a plurality of device keys Dk required to generate the media key Mk. Note that the tree structure shown in FIG. 2 is simplified for the sake of descriptive convenience. The present invention is not limited to this structure, and a deeper hierarchical tree structure is also available.

In AACS, a node coordinate Nr and the device key Dk are assigned to each node N in the tree structure shown in FIG. 2. The device key Dk of a lower layer node horizontally derived from an upper layer node on the upper side in FIG. 2 can be calculated by using a predetermined function F for the device key Dk value of the upper layer node serving as a derivation source. However, the device key Dk of the upper layer node cannot be calculated from the device key Dk of the lower layer node.

Based on AACS, a device node Nd serving as the lowest layer node, and the node coordinate Nr and device key Dk determined in accordance with a specific rule are supplied to the system 30. Assume that a node coordinate Nr(00) and corresponding device key Dk(00), a node coordinate Nr(0100) and corresponding device key Dk(0100), a node coordinate Nr(011) and corresponding device key Dk(011), and a node coordinate Nr(1) and corresponding device key Dk(1) are supplied to the system 30 to which a device node Nd₅ is assigned. However, this is merely an example of the structure. Under the present circumstances, a maximum of 250 device keys Dk may be supplied to the system.

A holding unit 34 including a storage apparatus such as a hard disk and memory holds the supplied node coordinates Nr and device keys Dk in association with each other. In FIG. 1, the holding unit 34 is arranged outside the media key generation apparatus 10. However, the holding unit 34 may be arranged in the media key generation apparatus 10.

On the other hand, based on AACS, the media key Mk is supplied to the medium M, and a media key block Mkb is present in it. Version information ver serving as identification information unique to the medium M is supplied to the media key block Mkb in advance. In accordance with the tree structure in FIG. 2, the media key block Mkb stores, in association with the node coordinate Nr associated with the corresponding device key Dk, each encryption value A obtained by encrypting the media key Mk using the device key Dk associated with the node coordinate Nr, such that the AACS-compatible system 30 can generate the media key Mk of the medium M. For example, a maximum of 5,000 encryption values A may be supplied to the media key block Mkb.

The media key generation apparatus 10 incorporated in the system 30 includes a search unit 12, calculation unit 14, write unit 16, nonvolatile storage medium 18, acquisition unit 20, and generation unit 22.

Upon insertion of the medium M into a reading unit 32 of the system 30, the reading unit 32 reads the media key block Mkb, and outputs this read result to the search unit 12.

On the basis of the read result from the reading unit 32, the search unit 12 searches the encryption values A (e.g., A1, A2, A3,...) in the media key block Mkb for the encryption value A and a storage position H of the encryption value A recorded in the media key block Mkb. The encryption value A is associated with the node coordinate Nr itself associated with one of the plurality of device keys Dk (e.g., the Dk(00), Dk(011), and Dk(1)) held by the holding unit 34, or the node coordinate Nr derived on the lower layer side from one of the node coordinates Nr (Nr(00), Nr(011), and Nr(1)).

Assume that a node coordinate Nr(1100) shown in FIG. 2 and a corresponding encryption value A(1100) are stored in the media key block Mkb. The encryption value A(1100) corresponds to the node coordinate Nr(1100) derived on the lower layer side from the node coordinate Nr(1) of the device key Dk(1) of the plurality of the device keys Dk (Dk(00), Dk(011), and Dk(1)) held by the holding unit 34. Hence, the encryption value A(1100) and the storage position H of the encryption value A(1100) are searched for by the search unit 12. The search unit 12 outputs this search result to the calculation unit 14 together with the version information ver included in the read result.

In accordance with the search result from the search unit 12, based on the derivation relationship between the node coordinate Nr(1100) associated with the found encryption value A(1100) and the node coordinate Nr(1) serving as the derivation source in the holding unit 34, the calculation unit 14 calculates a device key Dk(1100) value by encrypting the found encryption value A(1100) from the device key Dk(1) associated with the node coordinate Nr(1) serving as the derivation source.

That is, the calculation unit 14 processes the device key Dk(1) of the node coordinate Nr(1) using the function F to acquire a device key Dk(10) of a node coordinate Nr(10) and a device key Dk(11) of a node coordinate Nr(11). Of these device keys, the device key Dk(11) of the node coordinate Nr(11) is further processed using the function F, and a device key Dk(110) of a node coordinate Nr(110) and a device key Dk(111) of a node coordinate Nr(111) are acquired. Of these device keys, the device key Dk(110) of the node coordinate Nr(110) is further processed using the function F, and a device key Dk(1101) of a node coordinate Nr(1101) and the device key Dk(1100) of the node coordinate Nr(1100) are acquired. With this process, the calculation unit 14 outputs, to the write unit 16, the device key Dk(1100) of the node coordinate Nr(1100) together with the version information ver and storage position H which are output from the search unit 12.

The write unit 16 writes, on the nonvolatile storage medium 18 in association with each other, the device key Dk(1100) value, the version information ver, and a storage position H(1100) at which the found encryption value A(1100) is stored in the media key block Mkb, which are output from the calculation unit 14. In this case, the device key Dk(1100) value may be written in the nonvolatile storage medium 18 after encryption.

The nonvolatile storage medium 18 comprises a storage device such as a hard disk or memory.

When the medium M is to be played back by the system 30, the media key Mk must be generated. The media key Mk is generated by the acquisition unit 20 and generation unit 22 as follows.

That is, when the medium M is inserted into the reading unit 32 to be played back, the reading unit 32 reads the version information ver from the media key block Mkb, and outputs the version information ver to the acquisition unit 20. The acquisition unit 20 searches the nonvolatile storage medium 18 for the version information ver output from the reading unit 32. The acquisition unit 20 then acquires the device key Dk(1100) value corresponding to this version information ver, and the storage position H(1100) of the device key Dk(1100). When the device key Dk(1100) value is encrypted, it is decrypted after being acquired. The above-described acquired result is then output to the generation unit 22.

In accordance with the storage position H(1100) included in the acquired result output from the acquisition unit 20, the generation unit 22 acquires the encryption value A(1100) from the media key block Mkb via the reading unit 32. The media key Mk is generated by using the acquired encryption value A(1100) and the device key Dk(1100) value included in the acquired result output from the acquisition unit 20. The generated media key Mk is then transmitted to the system 30.

Accordingly, the system 30 can play back the content recorded on the medium M and copyrighted by AACS, by using the media key Mk transmitted from the generation unit 22.

Next, the operation of the media key generation apparatus 10 to which the media key generation method is applied according to the first embodiment described above will be described.

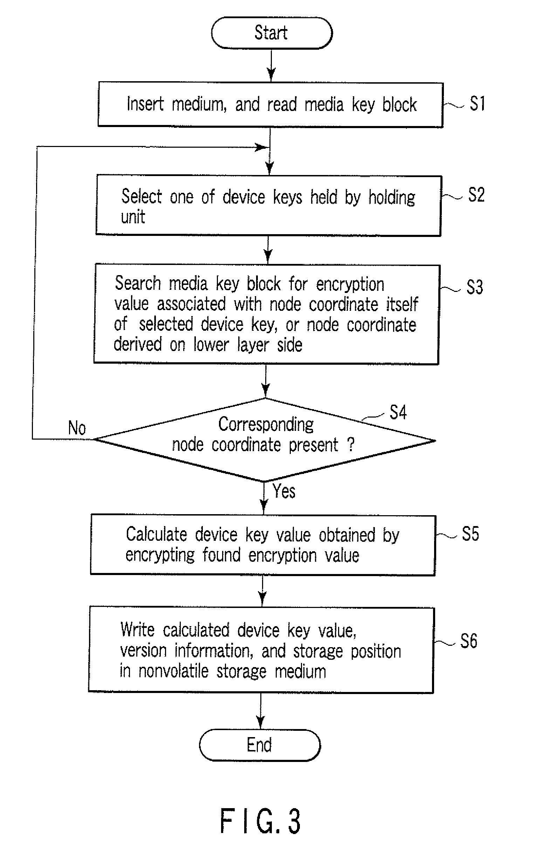

The operation to write, on the nonvolatile storage medium 18, the version information ver of the medium M, the device key Dk required to generate the media key Mk, and the storage position H of the encryption value A will be described in a flowchart of FIG. 3.

When the medium M is inserted into the reading unit 32 of the system 30, the reading unit 32 reads the media key block Mkb (S1). Based on AACS, the media key Mk is supplied to the medium M, and the media key block Mkb is present in it. The version information ver serving as the identification information unique to the medium M is supplied to the media key block Mkb in advance. In accordance with the tree structure in FIG. 2, the media key block Mkb stores, in association with the node coordinate Nr associated with the corresponding device key Dk, each encryption value A obtained by encrypting the media key Mk using the device key Dk associated with the node coordinate Nr, such that the AACS-compatible system 30 can generate the media key Mk of the medium M. When the media key block Mkb is read by the reading unit 32, the read result is further output to the search unit 12.

In accordance with the tree structure shown in FIG. 2, the device node Nd serving as the lowest layer node, and the node coordinate Nr and device key Dk determined in accordance with a specific rule are supplied to the system 30. The node coordinate Nr and the corresponding device key Dk are held by the holding unit 34 in association with each other.

On the basis of the read result from the reading unit 32, the search unit 12 searches the encryption values A (A1, A2, A3,...) in the media key block Mkb for the encryption value A and the storage position H of the encryption value A recorded in the media key block Mkb. The encryption value A is associated with the node coordinate Nr derived on the lower layer side from the node coordinate Nr (Nr(00), Nr(011), or Nr(1)) associated with one of the plurality of device keys Dk (e.g., the Dk(00), Dk(011), and Dk(1)) held by the holding unit 34.

Assume that the node coordinate Nr(1100) and the corresponding encryption value A(1100) are included in the media key block Mkb. First, the search unit 12 selects the first device key Dk(00) of the plurality of device keys Dk held by the holding unit 34 (S2). The encryption value A and storage position H which are associated with the node coordinate Nr(00) itself corresponding to the device key Dk(00) or the node coordinate Nr derived on the lower layer side are searched for from the media key block Mkb (S3).

When no corresponding node coordinate Nr is found (S4: NO), the flow returns to step S2, and the search unit 12 selects the next device key Dk(011) from the plurality of device keys Dk held by the holding unit 34 (S2). The encryption value A and storage position H which are associated with the node coordinate Nr(011) itself corresponding to the device key Dk(011), or the node coordinate Nr derived on the lower layer side is searched for from the media key block Mkb (S3).

As described above, by repeatedly performing the processes in steps S2 to S4, the search unit 12 can finally find, from the media key block Mkb, the encryption value A(1100) and storage position H(1100) which are associated with the node coordinate Nr(1100) on the lower layer side of the node coordinate Nr(1) corresponding to the device key Dk(1) in the holding unit 34 (S4: YES). The search unit 12 outputs this search result to the calculation unit 14 together with the version information ver included in the read result.

In accordance with the search result from the search unit 12, based on the derivation relationship between the node coordinate Nr(1100) associated with the found encryption value A(1100) and the node coordinate Nr(1) serving as the derivation source in the holding unit 34, the calculation unit 14 calculates the device key Dk(1100) value by encrypting the found encryption value A(1100) from the device key Dk(1) associated with the node coordinate Nr(1) serving as the derivation source (S5).

In AACS, a node coordinate Nr and the device key Dk are assigned to each node corresponding to a hollow bullet included in the tree structure shown in FIG. 2. The device key Dk of the node derived on the lower layer side can be calculated by performing processing using the predetermined function F for the device key Dk value on the upper layer side serving as the derivation source. Therefore, the calculation unit 14 first processes the device key Dk(1) of the node coordinate Nr(1) using the function F to acquire the device key Dk(10) of the node coordinate Nr(10) and the device key Dk(11) of the node coordinate Nr(11). Then, the device key Dk(11) of the node coordinate Nr(11) is processed using the function F, and the device key Dk(110) of the node coordinate Nr(110) and the device key Dk(111) of the node coordinate Nr(111) are acquired. Of these device keys, the device key Dk(110) of the node coordinate Nr(110) is further processed using the function F, and the device key Dk(1101) of the node coordinate Nr(1101) and the device key Dk(1100) of the node coordinate Nr(1100) are calculated.

With this process, the calculation unit 14 outputs, to the write unit 16, the device key Dk(1100) of the node coordinate Nr(1100) together with the version information ver and storage position H which are output from the search unit 12 to the calculation unit 14.

The write unit 16 writes, on the nonvolatile storage medium 18 in association with each other, the device key Dk(1100) value, the version information ver, and the storage position H which are output from the calculation unit 14 (S6). In this case, the device key Dk(1100) value is written in the nonvolatile storage medium 18 after encryption as needed.

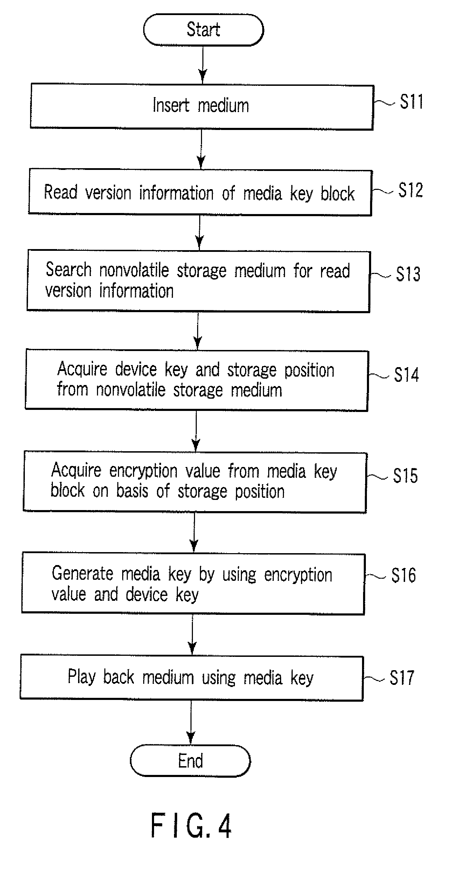

Next, the operation to cause the system 30 to play back the content recorded on the medium M and copyrighted by AACS will be described in the flowchart of FIG. 4.

That is, when the medium M is inserted into the reading unit 32 to be played back (S11), the reading unit 32 reads the version information ver from the media key block Mkb, and outputs the version information ver to the acquisition unit 20 (S12).

The acquisition unit 20 searches the nonvolatile storage medium 18 for the version information ver output from the reading unit 32 (S13). The acquisition unit 20 then acquires the device key Dk(1100) value corresponding to this version information ver, and the storage position H(1100) of the device key Dk(1100) (S14). When the device key Dk(1100) value is encrypted, it is decrypted after being acquired. The above-described acquired result is then output to the generation unit 22.

In accordance with the storage position H(1100) included in the acquired result output from the acquisition unit 20, the generation unit 22 acquires the encryption value A(1100) from the media key block Mkb via the reading unit 32 (S15). The media key Mk is generated by using the acquired encryption value A(1100) and the device key Dk(1100) value included in the acquired result output from the acquisition unit 20 (S16). The generated media key Mk is then transmitted from the generation unit 22 to the system 30.

Accordingly, the system 30 can play back the content recorded on the medium M and copyrighted by AACS, by using the media key Mk transmitted from the generation unit 22 (S17).

As described above, in the media key generation apparatus to which the media key generation method is applied according to the first embodiment, with this operation as shown in the flowchart of FIG. 3, the version information ver, device key Dk, and storage position H are once written in the nonvolatile storage medium 18. Hence, when the medium M is to be played back by the system 30 thereafter, the generation process of the media key Mk can be directly performed as shown in the flowchart of FIG. 4 without the operation shown in the flowchart of FIG. 3.

More specifically, about 250 device keys Dk may be held by the holding unit 34, and about 5,000 encryption values A may be stored in the media key block Mkb. Hence, the processing amount in steps S2 to S4 in FIG. 3 is generally enormous. Conventionally, since the processing amount of the system 30 for generating the media key Mk becomes enormous, and a long period of time is required until the media key Mk is generated. Accordingly, the waiting time until the content is started to be played back becomes prolonged, thus posing a problem. However, such disadvantage can be solved by incorporating, into the system 30, the media key generation apparatus to which the media key generation method is applied according to the first embodiment.

Note that in the modification of the above process, the found encryption value A(1100) itself may be written in the nonvolatile storage medium 18 in place of the storage position H(1100) of the found encryption value A(1100), in association with the calculated device key Dk(1100) value and version information ver. In this case, when the medium M is to be played back by the system 30, the device key Dk(1100) value and encryption value A(1100) which are associated with the version information ver which matches the version information ver of the media key block Mkb on the medium M are acquired from the nonvolatile storage medium 18. Then, the media key Mk(1100) is generated by using the acquired device key Dk(1100) value and encryption value A(1100).

In this arrangement, a time required to generate the media key Mk can be further reduced.

### (Second Embodiment)

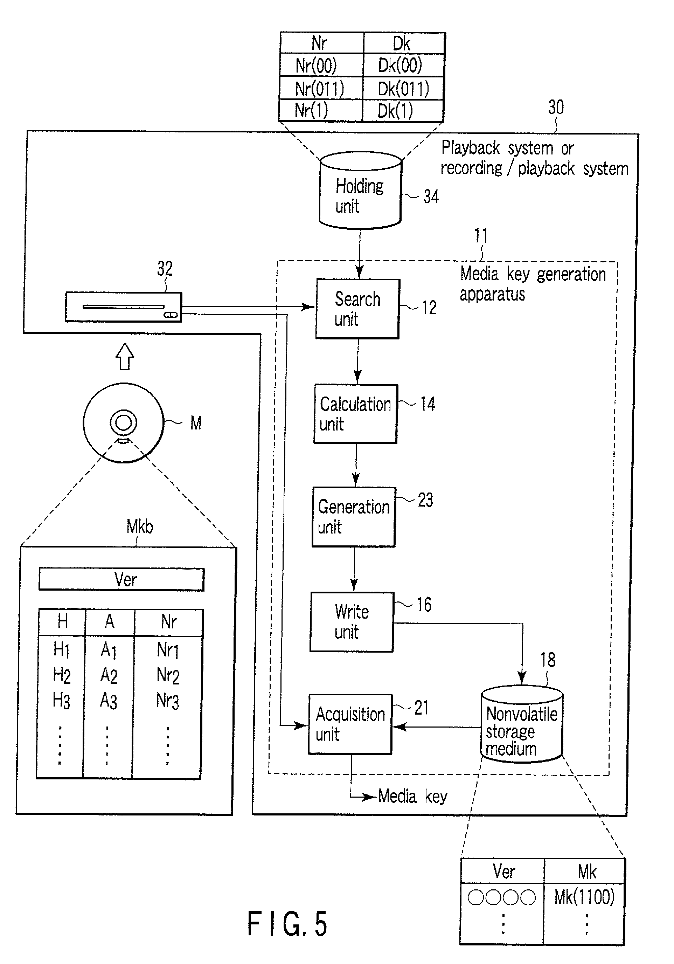

FIG. 5 is a functional block diagram showing an example of an arrangement of a media key generation apparatus 11 to which a media key generation method is applied according to the second embodiment.

The media key generation apparatus 11 to which the media key generation method is applied according to the second embodiment is the modification of a media key generation apparatus 10 to which a media key generation method is applied according to the first embodiment. Hence, the same reference numerals as in the first embodiment denote the same components in the second embodiment, and a description thereof will be omitted, and the second embodiment will be described below with an emphasis on these different points.

That is, in the media key generation apparatus 11 according to the second embodiment, a generation unit 22 of the media key generation apparatus 10 in the first embodiment is omitted, and a generation unit 23 is inserted between a calculation unit 14 and write unit 16. An acquisition unit 21 is also included in place of an acquisition unit 20.

The calculation unit 14 outputs, to the generation unit 23, a calculation result (e.g., a device key Dk(1100) of a node coordinate Nr(1100)), and a search result and version information ver which are output from the search unit 12.

The generation unit 23 generates a media key Mk (e.g., a media key Mk(1100)) by using the device key Dk (e.g., the device key Dk(1100)) included in the calculation result output from the calculation unit 14, and an encryption value A (e.g., an encryption value A(1100)) included in the search result. The generated media key Mk is output to the write unit 16 together with the version information ver output from the calculation unit 14.

The write unit 16 writes, in the nonvolatile storage medium 18, the media key Mk(1100) value and version information ver which are output from the generation unit 23, in association with each other. In this case, the media key Mk(1100) value may be written in the nonvolatile storage medium 18 after encryption.

When the medium M is to be played back by a system 30, the system 30 requires the media key Mk, which is acquired from the nonvolatile storage medium 18 by the acquisition unit 21 as follows.

That is, when the medium M is inserted into a reading unit 32 to be played back, the reading unit 32 reads the version information ver from the media key block Mkb, and outputs the version information ver to the acquisition unit 21. The acquisition unit 21 searches the nonvolatile storage medium 18 for the version information ver output from the reading unit 32 to acquire the media key Mk (e.g., the media key Mk(1100)) value. When the media key Mk value has been encrypted, it is decrypted. The acquired media key Mk is transmitted to the system 30.

Accordingly, the system 30 can play back the content recorded on the medium M and copyrighted by AACS, by using the media key Mk transmitted from the acquisition unit 21.

As described above, even when the media key Mk is stored in the nonvolatile storage medium 18, the same operation effects as those of the first embodiment can be obtained.

## Claims

1. A method of generating a media key required to cause a playback system (30) to play back content recorded on a medium (M) and copyrighted by Advanced Access Content System, **characterized in that**
the playback system (30) holds one of a plurality of device keys (Dk) required to generate the media key, in association with one of coordinates (Nr) hierarchically arranged in a tree structure, and
the medium (M) stores, in a block (Mkb) to which identification information (Ver) unique to the medium (M) is supplied in advance, each encryption value (A) obtained by encrypting the media key supplied to the medium (M) in advance by using each device key (Dk) associated with one of the coordinates (Nr) hierarchically arranged in the tree structure, in association with the coordinate (Nr) associated with the corresponding device key (Dk), the method comprising
searching the encryption values (A) stored in the block (Mkb) for the encryption value (A) associated with a parent coordinate serving as a coordinate associated with one of the plurality of device keys (Dk) held in the playback system (30), or a derivation coordinate serving as a coordinate on a lower layer side of the parent coordinate serving as a derivation source,
calculating a device key value (Dk) obtained by encrypting the found encryption value (A) from the device key (Dk) associated with the parent coordinate, on the basis of a derivation relationship between the parent coordinate and the coordinate associated with the found encryption value (A), and
generating the media key by using the calculated device key value (Dk) and the found encryption value (A).

2. A method according to claim 1, **characterized by** further comprising
writing the generated media key (Mk) and the block identification information (Ver) in a nonvolatile storage medium (18) in association with each other, and
acquiring, from the nonvolatile storage medium (18), the media key (Mk) associated with identification information (Ver) which matches the identification information (Ver) supplied to the block (Mkb) of the medium (M), when the medium (M) is to be played back by the playback system (30).

3. A method according to claim 2, **characterized by** further comprising
encrypting and writing the media key (Mk) when writing the generated media key (Mk) and the block identification information (Ver) in the nonvolatile storage medium (18) in association with each other, and
decrypting the media key (Mk) when the media key (Mk) is acquired from the nonvolatile storage medium (18).

4. A method according to claim 1, **characterized in that** generating the media key comprises
writing the calculated device key value (Dk), the block identification information (Ver), and the found encryption value (A) in the nonvolatile storage medium (18) in association with each other,
acquiring, from the nonvolatile storage medium (18), the device key value (Dk) and the encryption value (A) associated with identification information (Ver) which matches the identification information (Ver) supplied to the block (Mkb) of the medium (M), when the medium (M) is to be played back by the playback system (30), and
generating the media key by using the acquired device key value (Dk) and the acquired encryption value (A).

5. A method according to claim 4, **characterized by** further comprising
encrypting and writing the device key value (Dk) when writing the device key value (Dk), the block identification information (Ver), and the encryption value (A) in the nonvolatile storage medium (18) in association with each other, and
decrypting the device key value (Dk) when the device key value (Dk) and the encryption value (A) are acquired from the nonvolatile storage medium (18).

6. A method according to claim 1, **characterized in that**
searching further comprises searching for storage position information (H) of the encryption value (A),
generating the media key comprises
writing the calculated device key value (Dk), the block identification information (Ver), and the found storage position information (H) of the encryption value (A) in the nonvolatile storage medium (18) in association with each other,
acquiring, from the nonvolatile storage medium (18), the device key value (Dk) and the storage position information (H) associated with identification information (Ver) which matches the identification information (Ver) supplied to the block (Mkb) of the medium (M), when the medium (M) is to be played back by the playback system (30), and
acquiring the encryption value (A) from the block (Mkb) in accordance with the acquired storage position information (H), and generating the media key by using the acquired encryption value (A) and the acquired device key value (Dk).

7. An apparatus (10) for generating a media key required to cause a playback system (30) to play back content recorded on a medium (M) and copyrighted by Advanced Access Content System, **characterized in that**
the playback system (30) holds one of a plurality of device keys (Dk) required to generate the media key, in association with one of coordinates (Nr) hierarchically arranged in a tree structure, and
the medium (M) stores, in a block (Mkb) to which identification information (Ver) unique to the medium (M) is supplied in advance, each encryption value (A) obtained by encrypting the media key supplied to the medium (M) in advance by using each device key (Dk) associated with one of the coordinates (Nr) hierarchically arranged in the tree structure, in association with the coordinate (Nr) associated with the corresponding device key (Dk), the apparatus (10) comprising
a search unit (12) which searches the encryption values (A) stored in the block (Mkb) for the encryption value (A) associated with a parent coordinate serving as a coordinate associated with one of the plurality of device keys (Dk) held in the playback system (30), or a derivation coordinate serving as a coordinate on a lower layer side of the parent coordinate serving as a derivation source,
a calculation unit (14) which calculates a device key value (Dk) obtained by encrypting the found encryption value (A) from the device key (Dk) associated with the parent coordinate, on the basis of a derivation relationship between the parent coordinate and the coordinate associated with the found encryption value (A), and
a generation unit (22) which generates the media key by using the calculated device key value (Dk) and the found encryption value (A).

8. An apparatus (11) according to claim 7, **characterized by** further comprising
a write unit (16) which writes the generated media key (Mk) and the block identification information (Ver) in a nonvolatile storage medium (18) in association with each other, and
an acquisition unit (21) which acquires, from the nonvolatile storage medium (18), the media key (Mk) associated with identification information (Ver) which matches the identification information (Ver) supplied to the block (Mkb) of the medium (M), when the medium (M) is to be played back by the playback system (30).

9. An apparatus (11) according to claim 8,
**characterized in that**
the write unit (16) encrypts and writes the media key (Mk) when writing the generated media key (Mk) and the block identification information (Ver) in the nonvolatile storage medium (18) in association with each other, and
when the write unit (16) encrypts and writes the media key (Mk), the acquisition unit (21) acquires the media key (Mk) from the nonvolatile storage medium (18), and decrypts the acquired media key (Mk).

10. An apparatus (10) according to claim 7, **characterized in that** the generation unit (16,20,22)
writes the calculated device key value (Dk), the block identification information (Ver), and the found encryption value (A) in the nonvolatile storage medium (18) in association with each other,
acquires, from the nonvolatile storage medium (18), the device key value (Dk) and the encryption value (A) associated with identification information (Ver) which matches the identification information (Ver) supplied to the block (Mkb) of the medium (M), when the medium (M) is to be played back by the playback system (30), and
generates the media key by using the acquired device key value (Dk) and the acquired encryption value (A).

11. An apparatus according to claim 10, **characterized in that** the generation unit (16,20,22) encrypts and writes the device key value (Dk) when writing the device key value (Dk), the block identification information (Ver), and the encryption value (A) in the nonvolatile storage medium (18) in association with each other, and decrypts the acquired device key value (Dk) when the device key value (Dk) is acquired from the nonvolatile storage medium (18).

12. An apparatus (10) according to claim 7,
**characterized in that**
the search unit (12) further searches for storage position information (H) of the encryption value (A), and
the generation unit (16,20,22)
writes the calculated device key value (Dk), the block identification information (Ver), and the found storage position information (H) of the encryption value (A) in the nonvolatile storage medium (18) in association with each other,
acquires, from the nonvolatile storage medium (18), the device key value (Dk) and the storage position information (H) associated with identification information (Ver) which matches the identification information (Ver) supplied to the block (Mkb) of the medium (M), when the medium (M) is to be played back by the playback system (30), and
acquires the encryption value (A) from the block (Mkb) in accordance with the acquired storage position information (H), and generates the media key by using the acquired encryption value (A) and the acquired device key value (Dk).
